(19) Europäisches Patentamt / European Patent Office / Office européen des brevets

(11) **EP 2 860 367 A1**

(12) **DEMANDE DE BREVET EUROPEEN**

(43) Date de publication:
**15.04.2015 Bulletin 2015/16**

(51) Int Cl.:
*F01N 3/08* (2006.01)    *F01N 3/10* (2006.01)
*F01N 3/035* (2006.01)

(21) Numéro de dépôt: **14185340.8**

(22) Date de dépôt: **18.09.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **11.10.2013 FR 1359877**

(71) Demandeur: **PEUGEOT CITROËN AUTOMOBILES SA**
**78140 Velizy-Villacoublay (FR)**

(72) Inventeur: **Matthess, Nils**
**92300 Levallois Perret (FR)**

(54) **Dispositif de traitement de gaz d'échappement pour ligne d'échappement de véhicule diesel comprenant un élément de convérsion à dépollution**

(57)    Dispositif de traitement de gaz d'échappement pour ligne d'échappement de véhicule diesel comprenant un élément filtrant (20). Dans ce dispositif, l'élément de conversion à dépollution comprend un matériau de stockage temporaire d'oxydes d'azote NOx sur des parois (20P) assurant le traitement des gaz d'échappement dans l'élément de conversion à dépollution. Ce matériau est configuré sur les parois de l'élément de conversion à dépollution pour assurer ledit stockage temporaire pendant une phase de démarrage de moteur diesel en mélange pauvre et pour assurer une désorption par réduction des oxydes d'azote NOx par les composés réducteurs des gaz d'échappement en mode de fonctionnement standard du moteur diesel en mélange stoechiométrique. Ensemble de motorisation pour véhicule automobile, comprenant un moteur diesel et une ligne d'échappement ayant un tel dispositif de traitement des gaz d'échappement. Procédé de fonctionnement d'un tel ensemble de motorisation.

*Fig.1*

EP 2 860 367 A1

**Description**

La présente invention est relative à un dispositif de traitement de gaz d'échappement pour ligne d'échappement de véhicule diesel comprenant un élément de conversion à dépollution.

Un exemple de ce genre de dispositif est connu du document EP0740056 qui divulgue un ensemble de motorisation diesel dans lequel la ligne d'échappement comprend un dispositif de traitement de type à catalyseur trois voies et un dispositif de recirculation des gaz d'échappement pour gérer le rapport air-carburant stoechiométrique dans la chambre de combustion. En outre, un mode de réalisation prévoit un piège à oxydes d'azote NOx en amont du catalyseur trois voies dans la ligne d'échappement. Une telle installation de dispositif de recyclage et d'élément de conversion à dépollution spécifique à oxydes d'azote, de type piège à NOx, est relativement complexe et onéreuse.

Il est également connu du document US 2006/225411 un moteur de type essence, avec un fonctionnement à faible charge moteur en mélange pauvre et un fonctionnement à plus forte charge moteur en mélange stoechiométrique ou riche , le fonctionnement en pauvre et en riche permettant d'atteindre les prestations moteur voulues. Le piège à NOx décrit doit être purgé quand il est saturé, de façon connue.

La présente invention a notamment pour but d'améliorer les solutions connues.

A cet effet, l'invention a pour objet un dispositif de traitement de gaz d'échappement pour ligne d'échappement de véhicule diesel comprenant un élément de conversion à dépollution, caractérisé en ce que l'élément de conversion à dépollution comprend un matériau de stockage temporaire d'oxydes d'azote NOx sur des parois assurant le traitement des gaz d'échappement dans l'élément de conversion à dépollution, ce matériau étant configuré sur les parois de l'élément de conversion à dépollution pour assurer ledit stockage temporaire pendant une phase de démarrage de moteur diesel en mélange pauvre et pour assurer une désorption par réduction des oxydes d'azote NOx par les composés réducteurs des gaz d'échappement en mode de fonctionnement standard du moteur diesel en mélange stoechiométrique.

Dans le cadre de l'invention, il s'agit de moteurs Diesel, mais qui fonctionne à la stoechiométrie afin de pouvoir utiliser un catalyseur par exemple du type catalyseur trois voies, mais dont les démarrages notamment se feraient en mélange pauvre, d'où la nécessité d'ajouter un moyen de stockage temporaire des NOx, traités ensuite par le catalyseur ad hoc (du type trois voies) lorsque le moteur bascule après le démarrage du mode « pauvre » au mode « stoechiométrique ».

Dans divers modes de réalisation du dispositif selon l'invention, on peut éventuellement avoir recours en outre à l'une et/ou à l'autre des dispositions suivantes :

- l'élément de conversion à dépollution est un élément catalyseur trois voies comprenant le matériau de stockage temporaire ;

- l'élément de conversion à dépollution est un filtre à particules comprenant le matériau de stockage temporaire ;

- le matériau de stockage temporaire comprend au moins un élément parmi le rhodium, le cérium, le platine, le palladium, un métal alcalino-terreux, et un métal alcalin ;

- le métal alcalin du matériau de stockage temporaire est le potassium ;

- le métal alcalino-terreux du matériau de stockage temporaire est au moins l'un parmi le baryum et le magnésium ;

- le matériau de stockage temporaire est en couche de recouvrement d'une couche de traitement recouvrant un substrat des parois de l'élément de conversion à dépollution ;

- le cérium de la couche de recouvrement est à concentration supérieure à 80 grammes par litre, par exemple inférieure à 160 grammes par litre ;

- la concentration du baryum dans le matériau de stockage temporaire en couche de recouvrement, est inférieure à 30 grammes par litre ;

- la concentration de l'addition du rhodium et du palladium ou de l'addition du rhodium et du platine ou de l'addition du rhodium, du platine et du palladium, dans le matériau de stockage temporaire en couche de recouvrement, est de l'ordre de 0,35 grammes par litre ;

- le matériau de stockage temporaire est dans une couche de traitement recouvrant un substrat des parois de l'élément de conversion à dépollution ;

- le cérium de la couche de traitement est à concentration supérieure à 60 grammes par litre, par exemple inférieure à 160 grammes par litre.

Par ailleurs, l'invention a également pour objet un ensemble de motorisation pour véhicule automobile, comprenant un moteur diesel et une ligne d'échappement à dispositif de traitement des gaz d'échappement, caractérisé en ce que ce dispositif est conforme à l'invention, le matériau de stockage temporaire d'oxydes d'azote NOx permettant d'assurer ledit stockage temporaire pendant une phase de démarrage du moteur diesel en mélange pauvre et la désorption par réduction des oxydes d'azote NOx par les composés réducteurs des gaz d'échappement en mode de fonctionnement standard du moteur diesel en mélange stoechiométrique.

Par ailleurs, l'invention a également pour objet un procédé de fonctionnement d'un ensemble de motorisation tel que défini ci-dessus, comprenant d'une part une phase de démarrage du moteur diesel en mélange pauvre, pendant laquelle le matériau de stockage temporaire assure le stockage temporaire d'oxydes d'azote NOx et d'autre part un mode de fonctionnement standard du moteur diesel en mélange stoechiométrique, pendant lequel le matériau de stockage temporaire assure la désorption des oxydes d'azote NOx par leur réduction via les composés réducteurs des gaz d'échappement.

Dans un mode particulier de réalisation de ce procédé, la phase de démarrage du moteur diesel en mélange pauvre est suivie d'une phase temporaire de quelques secondes de fonctionnement du moteur en mélange riche avant le mode de fonctionnement standard du moteur diesel en mélange stoechiométrique.

D'autres buts, caractéristiques et avantages de l'invention apparaîtront au cours de la description suivante de plusieurs modes de réalisation, donnés à titre d'exemples non limitatifs, en regard des dessins joints dans lesquels :

- la figure 1 est une vue en perspective d'un dispositif de traitement de gaz d'échappement selon l'invention, avec un écorché montrant son élément de conversion à dépollution ;

- la figure 2 est une vue en coupe d'une partie microscopique d'une paroi de l'élément de conversion à dépollution du dispositif selon l'invention dans un mode de réalisation de revêtement d'un substrat de la paroi ;

- la figure 3 est un vue du type de la figure 2 pour un autre mode de réalisation du revêtement déposé sur le substrat.

En se reportant aux figures, la référence 10 désigne un dispositif de traitement de gaz d'échappement selon l'invention. Le dispositif de traitement de gaz d'échappement 10 fait partie d'une ligne d'échappement en étant raccordé d'une part à un tube amont 13 et d'autre part à un tube aval 15. Le tube amont 13 est relié à un collecteur d'échappement d'un moteur diesel. Le tube aval 15 est tel que son extrémité libre détermine la sortie à l'air libre de l'échappement, après un silencieux. Le moteur n'a pas besoin d'être représenté sur les figures car il est d'architecture classique, tout comme le reste du tube amont et du tube aval. Le dispositif de traitement de gaz d'échappement 10 comprend une enveloppe 17 qui renferme un élément de conversion à dépollution 20 sensiblement cylindrique. L'enveloppe comprend deux parties tronconiques, en amont et en aval, de chaque côté d'un tronçon central 17C qui est cylindrique. Sur les différentes figures, les mêmes références désignent des éléments identiques ou similaires.

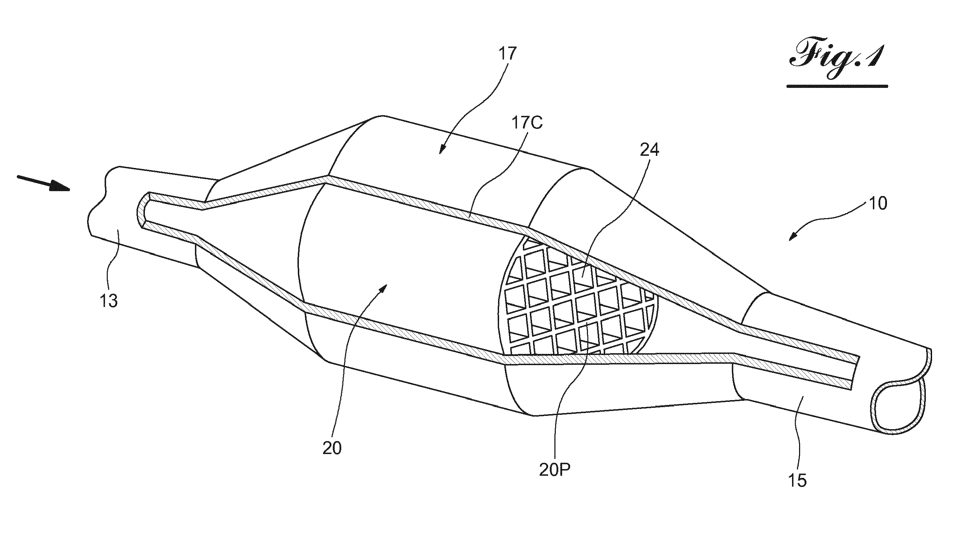

L'élément de conversion à dépollution 20 comprend un substrat 22 qui est d'encombrement extérieur cylindrique et qui est traversé par une très grande quantité de petits canaux 24 délimités par des parois 20P constituant des cloisons internes de l'élément de conversion à dépollution. Par exemple, ces canaux 24 sont en nid d'abeille de section transversale carrée (figure 1) et sont longitudinaux dans le sens de l'écoulement des gaz dans la ligne d'échappement. Un tel substrat 22 et ses canaux 24, par exemple en céramique, est de type connu dans des pots catalytiques « trois voies » pour véhicule à moteur à essence. Ces pots catalytiques « trois voies » traitent normalement dans les véhicules à moteur essence du monoxyde de carbone CO, des hydrocarbures imbrûlés HC et des oxydes d'azote NOx des gaz d'échappement.

Le dispositif 10 de traitement de gaz d'échappement selon l'invention est dédié à une application à un ensemble de motorisation diesel pour véhicule automobile. Cet ensemble de motorisation comprend le moteur diesel et la ligne d'échappement pourvue dudit dispositif 10 de traitement des gaz d'échappement selon l'invention.

Pour le traitement des gaz d'échappement du moteur diesel, les parois 20P déterminent les canaux 24 internes à l'élément de conversion à dépollution 20 qui comprend sur ces parois un matériau de stockage temporaire d'oxydes d'azote couramment notés NOx. Ce matériau est configuré sur les parois 20P de l'élément de conversion à dépollution 20 pour assurer ledit stockage temporaire pendant une phase de démarrage du moteur diesel en mélange pauvre et pour assurer une désorption par réduction des oxydes d'azote NOx par les composés réducteurs des gaz d'échappement en mode de fonctionnement standard du moteur diesel en mélange stoechiométrique.Les composés réducteurs sont du monoxyde de carbone CO, des hydrocarbures imbrûlés HC qui sont en quantité suffisante lors du fonctionnement qualifié de « standard » du moteur diesel en mélange stoechiométrique et qui sont traités dans l'élément de conversion à dépollution. Ici, il est considéré que le fonctionnement standard du moteur diésel est en utilisant un mélange air-carburant qui est stoechiométrique, sachant que dans la plupart des cas, des véhicules diésel classiques fonctionnent de manière standard en mélange pauvre.

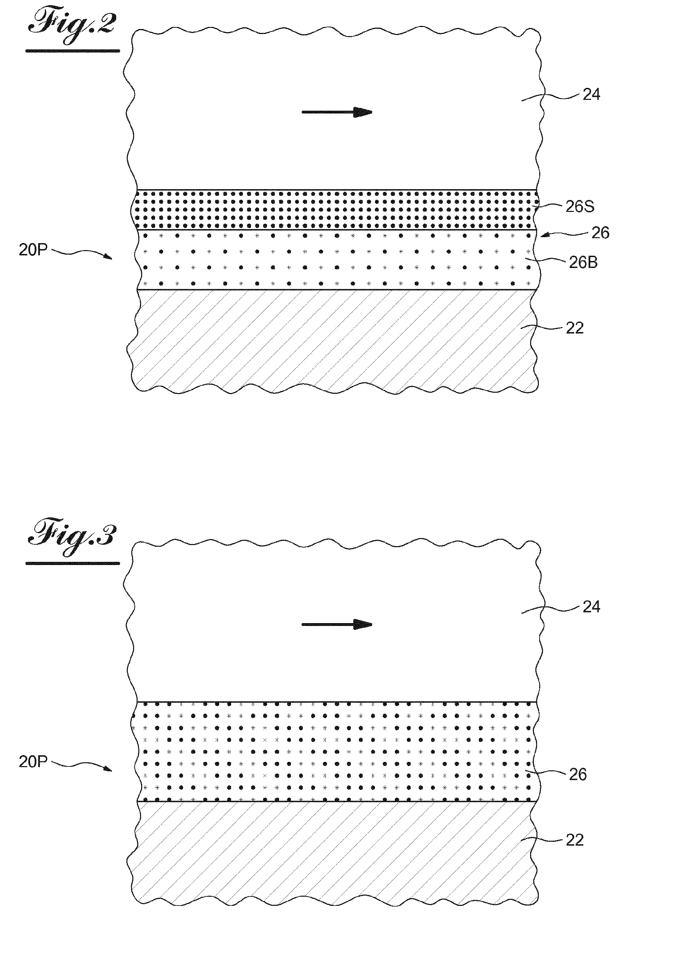

Dans le premier mode de réalisation du dispositif 10 de traitement de gaz d'échappement selon l'invention, comme le montre la partie de paroi 20P représentée schématiquement à la figure 2, le substrat 22 supporte un revêtement 26 en deux couches. L'une des couches est une couche de base 26B qui est de type classique dans un élément de conversion de pot catalytique trois voies pour véhicule à moteur à essence. Dans la présente application au traitement des gaz d'échappement de moteur diesel, cette couche classique de base 26B est dédiée au traitement type trois voies pour traiter du monoxyde de carbone CO, des hydrocarbures imbrûlés HC et des oxydes d'azote NOx dans le cas du fonctionnement standard du moteur. Le traitement vise à éliminer lesdits NOx en les convertissant en d'autres gaz moins polluants. En outre, le revêtement 26 comporte une couche de recouvrement 26S de la couche de base 26B. Cette couche de recouvrement 26S est déposée sur la couche de base.

La couche de recouvrement 26S est spécifique pour l'application diesel, en étant constituée par le matériau de stockage temporaire d'oxydes d'azote NOx. Ainsi, de manière générale, le revêtement 26 permet à l'élément de conversion à dépollution 20 d'être un élément catalyseur trois voies amélioré en comprenant le matériau de stockage temporaire des oxydes d'azote au démarrage du moteur.

En exemples avantageux de réalisations, le matériau de stockage temporaire des oxydes d'azote comprend au moins un élément parmi le rhodium, le cérium, le platine, le palladium, un métal alcalino-terreux, et un métal alcalin. Dans des exemples de réalisations, le métal alcalino-terreux du matériau de stockage temporaire est le baryum ou le magnésium, l'un n'excluant pas l'autre. Dans un exemple de réalisation, le métal alcalin du matériau de stockage temporaire est le potassium. En exemples avantageux de réalisations, le cérium de la couche de recouvrement est à concentration supérieure à 80 grammes par litre, par exemple en étant comprise entre 80 grammes par litre et 160 grammes par litre. La limite supérieure dépend des problèmes de contre pression et de coût matière notamment. Aussi en exemple de réalisation avantageux, la concentration de l'addition du rhodium et du palladium ou de l'addition du rhodium et du platine ou de l'addition du rhodium, du platine et du palladium, dans le matériau de stockage temporaire en couche de recouvrement, est de l'ordre de 0,35 grammes par litre, par exemple entre 0,25 grammes par litre et 0,40 grammes par litre. Encore en exemple de réalisation avantageux, la concentration du baryum dans le matériau de stockage temporaire en couche de recouvrement, est inférieure à 30 grammes par litre, par exemple entre 5 grammes par litre et 30 grammes par litre.

Le fonctionnement du dispositif de traitement de gaz d'échappement ressort déjà en partie de la description qui précède et va maintenant être détaillé.

Le dispositif de traitement de gaz d'échappement selon l'invention permet avantageusement d'utiliser, dans le cadre d'une motorisation diesel à allumage par auto inflammation du carburant, une architecture simple de dépollution de véhicule à moteur à essence ayant une combustion du carburant initiée par l'étincelle d'une bougie à chaque cylindre du moteur. Un tel moteur à essence est parfois appelé « à allumage commandé ». Les aménagements de l'élément de conversion à dépollution pour incorporer le matériau de stockage temporaire d'oxydes d'azote sont économiques. En revanche, le fonctionnement de la motorisation diesel selon l'invention présente des particularités pour un fonctionnement correct de la dépollution.

De manière générale, selon l'invention, le moteur diesel fonctionne de manière standard en mélange stoechiométrique alors que dans la plupart des véhicules diesels classiques, l'injection de carburant se fait de manière standard avec un mélange de l'air et du carburant qui est pauvre en carburant. Cependant, selon l'invention, lors du démarrage du moteur diesel, l'injection de mélange est effectuée en richesse de type pauvre en carburant. Concernant le démarrage en mélange pauvre, à richesse faible, un tel démarrage est aussi bien réalisé lors du premier démarrage à froid à la mise en route du véhicule que lors de redémarrages par exemple après un arrêt du moteur au feu rouge. Ainsi la notion de démarrage s'entend de tout lancement du moteur.

Le mélange pauvre en carburant au démarrage du moteur est géré de manière à ne durer qu'un très faible espace de temps. Il s'agit par exemple d'un espace de temps d'une seconde à deux secondes permettant au moteur de passer d'une vitesse de rotation nulle à sa vitesse de rotation normale au ralenti ou à plus grande vitesse de rotation pour faire rouler le véhicule par exemple lors d'un démarrage après un arrêt à un feu rouge. Quand le moteur tourne, le fonctionnement en mélange pauvre est arrêté et l'injection de carburant est à nouveau commandée de façon que la richesse soit stoechiométrique.

Lors de la phase de démarrage en mélange pauvre, des oxydes d'azote sont produits en quantité importante par rapport au fonctionnement standard du moteur. Ces oxydes d'azote proviennent de l'oxydation de l'azote de l'air dans la chambre de combustion et ils sont stockés dans l'élément de conversion à dépollution selon l'invention, dans le matériau de stockage temporaire de ces oxydes. Lors du retour en fonctionnement normal du moteur à richesse standard, des oxydes d'azote sont en quantité moins importante dans les gaz d'échappement et les réducteurs de ces gaz d'échappement sont en quantité suffisante pour permettre au matériau de stockage temporaire de transformer les oxydes d'azote fixé temporairement.

Ainsi, de manière générale, il peut être dit que l'ensemble de motorisation fonctionne suivant un procédé de fonctionnement qui comprend d'une part une phase de démarrage du moteur diesel en mélange pauvre, pendant laquelle le matériau de stockage temporaire assure le stockage temporaire des oxydes d'azote NOx et d'autre part un mode de fonctionnement standard du moteur diesel en mélange stoechiométrique. Pendant ce fonctionnement standard, le matériau de stockage temporaire assure la désorption des oxydes d'azote NOx par leur réduction via les composés réducteurs des gaz d'échappement.

Dans le premier mode de réalisation de dispositif de traitement de gaz échappement selon l'invention qui vient d'être décrit, la dépollution s'effectue avec un élément catalyseur de type trois voies amélioré en étant pourvue d'un matériau de stockage temporaire des oxydes d'azote. Le stockage est effectué brièvement au démarrage du moteur diesel. Le fonctionnement de démarrage du moteur est en mélange pauvre, ce fonctionnement étant suivi dès la fin du démarrage par un fonctionnement standard du moteur incluant l'injection de carburant en mélange stoechiométrique. Un rapport de richesse égale à 1 correspond au mélange stoechiométrique.

Dans un mode de réalisation particulier de la commande de l'injection, la phase de démarrage du moteur diesel en mélange pauvre est suivie d'une phase temporaire de quelques secondes de fonctionnement du moteur à richesse élevée, ou en mélange riche, avant le mode de fonctionnement standard du moteur diesel en mélange stoechiométrique. De manière classique, le rapport de richesse correspond à la formule :

$$R= \text{[(masse de carburant / masse d'air) réellement injectée] divisé par [(masse de carburant / masse d'air) stœchiométrique].}$$

Par mélange pauvre, on entend par exemple une richesse nettement inférieure au rapport 1, par exemple un rapport de richesse pouvant être dans un intervalle de 0,15 à 0,7. La phase temporaire de richesse élevée correspond par exemple à un rapport de richesse de 1,2 assurant ainsi une très courte étape de purge du matériau de stockage temporaire d'oxydes d'azote.

En variante de réalisation, telle que représentée à la figure 3, la dépollution s'effectue toujours avec un élément catalyseur de type trois voies amélioré. Dans ce mode de réalisation, le matériau de stockage temporaire n'est plus dans une couche de recouvrement qui tapisse une couche de traitement habituel de dépollution de type trois voies. Dans la variante de réalisation telle que représentée à la figure 3, le matériau de stockage temporaire des oxydes d'azote est mélangé à un revêtement déposé sur le substrat. Ce revêtement est enrichi en éléments de stockage d'oxydes d'azote. Ainsi une unique couche assure le stockage temporaire pour la phase de démarrage du moteur et la dépollution en mode de fonctionnement standard du moteur diesel. Le matériau de stockage temporaire est donc dans une couche de traitement 26 recouvrant directement le substrat de paroi 20P de l'élément de conversion à dépollution.

En exemple de dosage de la couche unique de matériau de stockage temporaire et de matériau de dépollution standard des oxydes d'azote, le traitement des oxydes d'azote est assuré par du cérium qui est à concentration supérieure à 60 grammes par litre, par exemple en étant comprise entre 60 grammes par litre et 160 grammes par litre. La limite supérieure dépend des problèmes de contre pression et de coût matière notamment. Le cérium à cette concentration sert donc tant au stockage temporaire qu'au traitement normal des oxydes d'azote pour dépolluer les gaz échappement. Un même dosage peut être choisi pour du baryum plutôt que pour du cérium.

En variante de réalisation, la dépollution s'effectue toujours lors du démarrage du moteur en utilisant un matériau de stockage temporaire d'oxydes d'azote, mais ce matériau de stockage temporaire est intégré à un élément de conversion à dépollution qui est dans un filtre à particules et non plus dans un élément catalyseur à trois voies. Ainsi, il s'agit d'un filtre à particules, dont l'élément de conversion à dépollution est imprégné avec le matériau de stockage temporaire d'oxydes d'azote. Dans la ligne d'échappement, un élément catalyseur à trois voies classique peut être présent par exemple en amont du filtre à particules qui est amélioré en comprenant selon l'invention un matériau de stockage temporaire d'oxydes d'azote.

En variante proche de réalisation, le matériau de stockage temporaire d'oxydes d'azote peut être présent en améliorant un filtre à particules et un catalyseur trois voies qui sont disposés en série d'un derrière l'autre dans la ligne d'échappement du véhicule diesel.

Dans ces deux dernières variantes à matériau de stockage temporaire améliorant un filtre à particules, le moteur fonctionne comme expliqué précédemment, en démarrant en mélange pauvre puis après ce court instant de démarrage, en fonctionnant de manière standard à richesse stoechiométrique. La phase de démarrage du moteur diesel en mélange pauvre peut encore être suivie d'une phase temporaire de quelques secondes de fonctionnement du moteur en mélange riche avant le mode de fonctionnement standard du moteur diesel en mélange stoechiométrique.

Dans le cas du matériau de stockage temporaire ajouté à un filtre à particules, le substrat du filtre à particules est de la cordiérite, de la mullite ou du carbure de silicium SiC comme classiquement dans le cas des filtres à particules usuels pour véhicule diesel.

Avantageusement, l'invention permet de disposer d'une fonction de stockage des oxydes d'azote pour retenir les oxydes d'azote produits pendant les phases de démarrage ou de redémarrage en mélange pauvre, avant d'être convertis, par action des espèces réductrices CO, H2, HC émises par le moteur, une fois que le moteur repassera en mode de fonctionnement standard en mélange stoechiométrique.

De manière générale, concernant le substrat, il peut être considéré une base d'élément de conversion telle qu'une brique poreuse, ou une matrice à alternance de canaux.

Avantageusement, l'invention permet de disposer d'un système particulièrement économique de dépollution de moteur diesel fonctionnant à stoechiométrie (rapport de richesse égal à 1). Ainsi l'invention permet de respecter des normes sévères sur les émissions de pollution de véhicule diesel, tout en évitant de recourir à un système de dépollution très complexe et volumineux qui serait basé sur l'utilisation d'un catalyseur d'oxydation d'un catalyseur d'élimination des oxydes d'azote et d'un filtre à particules. Ainsi il est aussi économisé tout dispositif complexe et volumineux de régénération de filtre à particules qui nécessiterait par exemple un injecteur à carburant spécifique pour le traitement des suies stockées dans le filtre ou par exemple d'additif amené d'un réservoir spécifique via une pompe et des canalisations. De même, est aussi évitée l'utilisation d'un piège à oxydes d'azote. En effet, ce dernier est coûteux d'une part en termes de métaux précieux puisqu'ils sont généralement contenus en grande quantité et d'autre part en termes de surconsommation de carburant car son fonctionnement nécessite des purges fréquentes en milieu riche qui grève donc la consommation.

Avantageusement, l'invention permet une dépollution efficace même en utilisant un mélange pauvre au démarrage du moteur diesel. En effet, l'invention permet, en aménageant un système de dépollution proche de celui des véhicules à moteur essence et en aménageant le fonctionnement d'un moteur diesel, une efficacité particulière de dépollution tout comme un faible coût du dispositif de traitement de gaz échappement. Avantageusement, l'invention permet de disposer d'une possibilité de dépollution efficace dans une ligne d'échappement dépourvue de volumineux et onéreux équipements de dépollution.

**Revendications**

**1.** Procédé de fonctionnement d'un ensemble de motorisation pour véhicule automobile, comprenant un moteur diesel et une ligne d'échappement à dispositif de traitement des gaz d'échappement, ledit dispositif de traitement de gaz d'échappement (10) comprenant un élément de conversion à dépollution (20) **caractérisé en ce que** l'élément de conversion à dépollution (20) comprend un matériau (26, 26S) de stockage temporaire d'oxydes d'azote NOx sur des parois (20P) assurant le traitement des gaz d'échappement dans l'élément de conversion à dépollution, ce matériau étant configuré sur les parois de l'élément de conversion à dépollution pour assurer ledit stockage temporaire pendant une phase de démarrage de moteur diesel en mélange pauvre et pour assurer une désorption par réduction des oxydes d'azote NOx par les composés réducteurs des gaz d'échappement en mode de fonctionnement standard du moteur diesel en mélange stoechiométrique.

**2.** Procédé selon la revendication 1, **caractérisé en ce que** l'élément de conversion à dépollution (20) est un élément catalyseur trois voies comprenant le matériau (26, 26S) de stockage temporaire.

**3.** Procédé selon la revendication 1, **caractérisé en ce que** l'élément de conversion à dépollution (20) est un filtre à particules comprenant le matériau (26, 26S) de stockage temporaire.

**4.** Procédé selon l'une quelconque des revendications 1 à 3, **caractérisé en ce que** le matériau de stockage temporaire est en couche de recouvrement (26S) d'une couche de traitement (26B) recouvrant un substrat (22) des parois (20P) de l'élément de conversion à dépollution.

**5.** Procédé selon l'une quelconque des revendications 1 à 3, **caractérisé en ce que** le matériau de stockage temporaire est dans une couche de traitement (26) recouvrant un substrat (22) des parois (20P) de l'élément de conversion à dépollution.

**6.** Procédé selon l'une quelconque des revendications précédentes, **caractérisé en ce que** le matériau (26, 26S) de stockage temporaire comprend au moins un élément parmi le rhodium, le cérium, le platine, le palladium, un métal alcalino-terreux, et un métal alcalin.

**7.** Procédé selon la revendication 6 combinée à la revendication 5, **caractérisé en ce que** le cérium de la couche de traitement (26) est à concentration supérieure à 60 grammes par litre.

**10.** Procédé selon l'une des revendications précédentes, dans lequel la phase de démarrage du moteur diesel en mélange pauvre est suivie d'une phase temporaire de quelques secondes de fonctionnement du moteur en mélange riche avant le mode de fonctionnement standard du moteur diesel en mélange stoechiométrique.

EP 2 860 367 A1

_Fig.2_

24

26S

26

26B

20P

22

_Fig.3_

24

20P

26

22

**Europäisches Patentamt**

**European Patent Office**

**Office européen des brevets**

## RAPPORT DE RECHERCHE EUROPEENNE

Numéro de la demande

EP 14 18 5340

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2009/060290 A2 (TOYOTA MOTOR CO LTD [JP]; CATALER CORP [JP]; SAKURAI KENJI [JP]; MIYAS) 14 mai 2009 (2009-05-14) * page 13, alinéas 47,48; figures 1,8 * | 1,4-8 | INV. F01N3/08 F01N3/10 F01N3/035 |
| X | US 2006/225411 A1 (KANAZAWA SHOGO [JP] ET AL) 12 octobre 2006 (2006-10-12) * alinéas [0038], [0039]; figure 1 * | 1,3-7 | |
| X | EP 1 563 892 A1 (HITACHI LTD [JP]) 17 août 2005 (2005-08-17) * abrégé * | 1,2,4-7 | |
| A | WO 2012/085564 A1 (JOHNSON MATTHEY PLC [GB]; BRISLEY ROBERT JAMES [GB]; CAMM KENNETH DAVI) 28 juin 2012 (2012-06-28) * page 9 * | 7 | |

| | DOMAINES TECHNIQUES RECHERCHES (IPC) |
|---|---|
| | F01N F02D |

Le présent rapport a été établi pour toutes les revendications

| Lieu de la recherche | Date d'achèvement de la recherche | Examinateur |
|---|---|---|
| Munich | 29 janvier 2015 | Blanc, Sébastien |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 18 5340

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-2015

| Document brevet cité au rapport de recherche | | Date de publication | Membre(s) de la famille de brevet(s) | | | Date de publication |
|---|---|---|---|---|---|---|
| WO 2009060290 | A2 | 14-05-2009 | DE | 112008002983 | T5 | 14-10-2010 |
| | | | JP | 4485564 | B2 | 23-06-2010 |
| | | | JP | 2009114994 | A | 28-05-2009 |
| | | | US | 2011079001 | A1 | 07-04-2011 |
| | | | WO | 2009060290 | A2 | 14-05-2009 |
| US 2006225411 | A1 | 12-10-2006 | EP | 1866526 | A1 | 19-12-2007 |
| | | | JP | 4544011 | B2 | 15-09-2010 |
| | | | JP | 2006291824 | A | 26-10-2006 |
| | | | US | 2006225411 | A1 | 12-10-2006 |
| | | | WO | 2006109820 | A1 | 19-10-2006 |
| EP 1563892 | A1 | 17-08-2005 | EP | 1563892 | A1 | 17-08-2005 |
| | | | JP | 2005224682 | A | 25-08-2005 |
| | | | US | 2005188684 | A1 | 01-09-2005 |
| WO 2012085564 | A1 | 28-06-2012 | EP | 2665545 | A1 | 27-11-2013 |
| | | | JP | 2014501613 | A | 23-01-2014 |
| | | | KR | 20140015295 | A | 06-02-2014 |
| | | | US | 2013336865 | A1 | 19-12-2013 |
| | | | WO | 2012085564 | A1 | 28-06-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- EP 0740056 A
- US 2006225411 A